(19)

**Europäisches Patentamt**
**European Patent Office**
**Office européen des brevets**

(11) **EP 1 292 483 B1**

(12) **EUROPEAN PATENT SPECIFICATION**

(45) Date of publication and mention
of the grant of the patent:
**28.02.2007 Bulletin 2007/09**

(21) Application number: **01931931.8**

(22) Date of filing: **23.05.2001**

(51) Int Cl.:
***B61L 23/34*** *(2006.01)*    ***B61L 25/02*** *(2006.01)*
***B61L 27/00*** *(2006.01)*

(86) International application number:
**PCT/GB2001/002311**

(87) International publication number:
**WO 2001/089905 (29.11.2001 Gazette 2001/48)**

(54) **Method, apparatus and memory means for determining if a train collision is possible**

Methode, Vorrichtung and Speichermedium zur Bestimmung von einer möglichen Zugkollision

Méthode, dispositif et moyens de mémoire pour la détermination de possibles collisions de trains ferroviaires

(84) Designated Contracting States:
**AT BE CH CY DE DK ES FI FR GB GR IE IT LI LU MC NL PT SE TR**

(30) Priority: **23.05.2000 GB 0012519**

(43) Date of publication of application:
**19.03.2003 Bulletin 2003/12**

(73) Proprietor: **Oxford Virtual Markets Limited Oxford OX1 1ST (GB)**

(72) Inventor: **SEIFERT, Benedict Oxford OX1 1ST (GB)**

(74) Representative: **Tyson, Robin Edward J.A. Kemp & Co., 14 South Square, Gray's Inn London WC1R 5JJ (GB)**

(56) References cited:
**EP-A- 0 958 987**        **WO-A-98/08314**
**WO-A-99/52091**         **US-A- 5 072 900**
**US-A- 5 428 546**

**Description**

The present invention generally relates to the field of safety systems for use with trains and other rail-based vehicles.

More particularly, the present invention relates to a safety system using mobile computerised communication technology so as to avoid train crashes and other accidents.

The present state of the art in rail safety systems is known as Automatic Train Protection (ATP). In an ATP System, information is transmitted to the train cab electronically. In particular, the speed limit of the section in which a train is travelling and usually the speed limit of the next section are each transmitted to each train. In its most sophisticated form, the ATP system will be interlocked with the braking system of the train so as to invoke a braking application if the driver exceeds the speed limit for the section US 5,072,900 discloses such a system. The ATP system consists of a series of speed bands which appear behind the first train on a line so that the speed of a second train on the line reduces in steps as it approaches. These speed bands move with the first train (either smoothly or in "jumps" as the first train moves between block sections) and the permitted speed increases from zero in the band directly behind the train to full speed at some distance further behind the train. The size of the bands and the speeds are chosen in accordance with the safe braking distance of any train. The ATP system assumes that all trains have the same braking distance which is not the case on standard mainline railways. On such railways, there are many different types of trains which all have different braking characteristics. The main drawback of ATP is that to install it requires updating of the train and rail infrastructure, resulting in a very high cost. The equipment required for ATP is also vulnerable to bad weather, electronic interference, damage, vandalism and theft.

WO 99/52091 discloses a system for alerting the crew of a train of the proximity of other trains. Simply, each train transmits its own position and is able to receive the transmitted positions of other nearby trains. These positions are displayed to the driver who can take appropriate action if required. Thus, the system is still prone to driver error and is not useful in the vicinity of a station where traffic is so dense that the knowledge that other trains are in the vicinity is of no relevance. The onboard train computers of this system do not themselves have a methodology for predicting a collision but simply organise descriptive information for the driver.

It is an objective of the present invention to provide a system that can be installed in an existing rail infrastructure at a lower cost than ATP. Furthermore, it is desired to provide a system which can automatically predict a collision and take automatic action to prevent such a collision.

Accordingly, the present invention provides a method of determining if a train collision is possible, said method comprising the steps of obtaining data relating to the position of a train; transmitting said data to a controller; receiving said data at said controller; performing a calculation at said controller using said data to predict a position of said train at a future time; and using said predicted future position to determine whether any action needs to be taken to collide with another train or other object.

Further, the present invention also provides apparatus for determining the possibility of a train collision, said apparatus comprising first means situated on said train and second means situated remote from said train; said first means comprising: position determining means for determining the position of said train;
communication means operatively linked to said position determining means for transmitting the position determined by said position determining means; said second means comprising:

receiving means for receiving said determined position from said communication means; prediction means for predicting a future position of said train based on said received determined position; and collision determining means for determining whether a collision is possible based on the result of said prediction means.

The present invention also provides a memory means storing computer readable instructions which, when connected to a suitable computer, is operable to cause said computer to carry out the following method:

receive data from a plurality of trains, said data relating to a determined position of said respective train;
accessing a database available to said computer, said database containing information about the train network on which said train is located;
calculating, using said received position data and said network database, the position of each train on a track of said network;
predicting the position of each train at a point in time in the future; and determining if a collision between two or more of said plurality of trains is possible using said predicted future positions.

In a preferred embodiment of the invention, differenced position vectors are derived from the obtained position data, these differenced position vectors having vector coordinates representing the difference between two consecutive coordinates of a vector of the position data. Preferably, the differenced position vector derived from the position data is compared with a series of stored differenced position vectors in a data base. Similar stored differenced position vectors are then identified. Alternatively, the position data itself may be compared with other position data stored in a database. Preferably, two vectors are determined to be similar if the magnitude of a third vector obtained by subtracting the stored vector from the present vector is less than some prescribed number.

Preferably, the calculation also includes extracting predicted data from the database, this predicted data being data recorded at a particular period of time after the data which has been identified as similar. In order to translate the predicted data, which might be in the form of differenced position vectors, to useful data, it may be necessary to add an offset to all the predicted data so that a predicted position of the train on the track is obtained.

The advantage of the using differenced position vectors rather than simple position vectors themselves is that the differenced positioned vectors are independent of the train's absolute position. Thus, differenced positioned vectors on previous train journeys on other tracks for example can be stored in the database and used to obtain a prediction for the present train journey.

Typically, the predicted data will comprise a number of vectors extracted from the database which are similar to the present journey vector. This range of extracted vectors will have a maximum value and a minimum value for any given particular period of time. These maximum and minimum values may be used to give a range of possible train positions at this future time.

In a preferred embodiment of the present invention, the above method is carried out for a number of trains on the network so that a range of potential future positions is obtained for each train. The step of determining if a collision is possible preferably comprises determining whether at least some of the plurality of predicted intervals of possible train positions for the plurality of trains overlap. Remedial action can be taken if any overlapping is found.

Preferably, in accordance with the present invention, the obtained data relating to the position of the train is converted to position data along a real line model. The calculation of predicted train positions is then carried out along the real line model and the results are changed back to data representing actual positions along the track network. The has the advantage that the method of prediction can be kept separate from the physical topology of the track network, which is dictated by the position of the points etc.

The present invention will be more fully described, by way of non-limitative example only, with reference to the accompanying drawings, in which:-

Figure 1 shows schematically the main features of an embodiment of the present invention;
Figure 2 shows schematically a model of a simple rail network having three stations and two tracks;
Figure 3 shows schematically a model of another simple rail network having four stations and two tracks;
Figure 4 shows schematically a model of yet another simple rail network having six stations and three tracks;
Figure 5 shows schematically a model of a network similar to the network of Figure 3 which is used to describe the train future position prediction method of the present invention;
Figure 6 shows schematically the relationship between a modelled track network and the concept of a "real line";
Figure 7 shows schematically an inverse relationship between a real line model and a track network model;
Figure 8 shows a graph of velocity versus time for a particular train; and
Figure 9 shows a corresponding graph of distance versus time for the same train.

The present invention comprises monitoring at some central location at least the position of the active trains on a particular network. This is achieved by providing means, on each train, for detecting the position of the train and for communicating this position to the central location. Appropriate means are provided at the central location for analysing the positions of the trains and predicting if a collision is possible or likely. The means at the central location are operable to communicate to at least some of the trains on the network a message that a collision is possible or likely so that appropriate action may be taken.

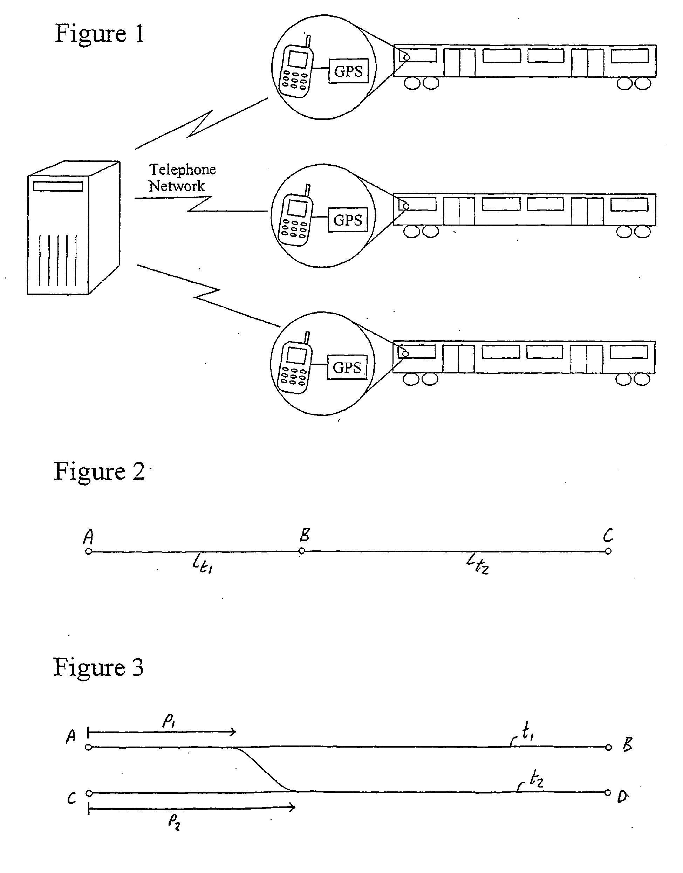

Figure 1 shows a schematic illustration of an embodiment of the invention. In Figure 1, only three trains are shown and these are intended to represent all of the active trains on a particular defined network. A network may be defined arbitrarily as a particular group of tracks. Alternatively (and more usually), it may be defined as a group of tracks upon which the trains run wherein the tracks are chosen because there is at least a possibility of a train on one track being able to collide with a train on another, or the same track.

Each train is provided with a communication device represented in Figure 1 by a mobile telephone. The mobile telephone is capable of communicating with a central controller via a communications network, which could include, for example, a cellular telephone network. Preferably, the mobile telephone is operable to exchange data directly with the central controller in the form of digital messages. Each train is also provided with means for determining its own position either relative to some known position or absolute with respect to some defined axis. Preferably, these means comprise a GPS (Global Positioning System) receiver. The means for determining the train's position are operable to communicate with the mobile telephone so that the position of the train may be transmitted to the central controller. In this way, the position of every train on the network is known by, or is able to be calculated by, the central controller. The central controller can then make a prediction as to whether it is possible that a collision may occur. This prediction may be based, for example, on whether a train comes within a certain distance of another train on the network.

The means for communicating with the central controller may take any suitable form. If a mobile telephone is used, it is preferably a "smart mobile phone" which is able to handle data and has computer connectivity. Alternatively, a DPA (Digital Personal Assistant) with integrated modem or a mobile computer attached to a digital mobile phone may be used. All of these devices allow the transmission of digital data over the telephone network which is advantageous to the present invention.

The data may be transmitted over the telephone network using the GSM (Global System for Mobile Communications) standard or WAP (Wireless Application Protocol) which is the standard for connecting mobile phones and other devices to the Internet.

Further information on suitable devices may be found in a paper entitled "Mobile Commerce Report" by Durlacher Research Limited, London 1999.

Preferably the known global positioning system is used as the means to determine the position of the train in space. These means may simply comprise a receiver for receiving the GPS signals from the GPS satellites so that these received signals may be transmitted to the central controller via the communication means. The central controller may then decode the signals to provide the location of the train. Alternatively, the GPS receiver on each train can be operable to decode the GPS signals itself so that the communication means can transmit to the controller data representing the position of the train in space. Preferably, the GPS receiver comprises a commercially available receiver which can output a position on the surface of the earth as a data string.

Other technology for calculating one's position is known and may also be used. For example, a signal transmitted by the communication means may be received by a number of nearby base stations and the time of receipt compared so that the position of the train may be triangulated.

The central controller preferably consists of a computer system linked to the telephone network by modem or other suitable means. The computer system has access to a database which stores a geometric model of the rail network. It is therefore possible for the central controller to construct a model of the rail system using the geometric rail network database and the received train positions. The trains may therefore be tracked as they move along the tracks of the network. The central controller preferably also has access to a database holding information on the expected trajectory of a train. For example, it is not uncommon for two stations to be connected by two tracks with sections at various points along the track at which the train may change track (known as "points" or "switches"). The expected trajectory of the train is information on which track the train is expected to be on at various distances between the two stations. For example, a specific train could be on track 1 for 3 miles, then cross over to track 2 for 27 miles, then to track 1 again for 34 miles. This information is constructed by referring to the present state of the points in the network (for more information on what is meant by the "state of the points", see later). This additional information database allows the central controller to determine which track a particular train is on when the positional information transmitted by the train is not accurate enough to be able to distinguish between adjacent tracks. This additional information is not, however, necessary if the positional data is extremely accurate (so that the track that the train is on can be determined by comparing the positional data with the model of the rail network).

The present commercial version of the GPS system has an accuracy of 100 metres, although planned new commercial versions of the system will be accurate to within 4 metres. That is to say, the actual point in space of the receiver could be up to 100 metres away from the measured point. Thus, it is necessary for the central controller to construct a disc of diameter 200 metres the centre of which is the measured position. The actual position of the train is then known to be somewhere in the disc. This disc is then superimposed over the model of the rail network and the expected trajectory data is used to identify which track the train is on. A section of track may then be identified (maximum length = 200 metres) upon which the head of the train is located.

The error in the commercial GPS signal is a random one and as such it is possible to reduce or eliminate it using standard noise elimination procedures. More accuracy can be obtained if a nearby base station (whose position is known) also receives the GPS satellite signals so that the error (which is an offset error) may be calculated and deducted from the measurements.

Preferably, the communication means and central controller communicate with one another via a secure extranet. An extranet is a physically secure network using IP (Internet Protocol) technical standards but being physically detached from the open Internet, for the purposes of security and speed of transmission. In such a case, the central controller would have the function of a web server providing Internet facilities. Each communication means located on respective trains would be operable to access a particular web site provided by the web server in order to upload the positional information. Information may also be downloaded from the web site, but this is optional.

Operationally linked to the web server is a control server which carries out the various calculations and predictions required. In practice, the web server and control server preferably comprise a single computer system. It is the control server that has access to the database storing the geometric model of the network and the optional database storing the expected train trajectory information.

Preferably, communication will be such that train positional information is transmitted from each train to the web server at regular time intervals, for example once every second. This regularity could be fixed for the whole system or variable depending on various parameters of the rail network system. For example, information could be transmitted more regularly when the train is travelling faster than when it is stationary. As another example, information could be transmitted more regularly in busy areas where collisions are more likely to occur than in areas comprising of a single track in open countryside.

The structure of the database storing the geometric model of the rail network will now be described. This description is by way of example only and any way of storing the rail network data so that the positions of trains can be tracked and predictions can be made regarding collisions is encompassed by the present invention.

As an example, Figure 2 shows a simple model for a two-track railway system with three stations. The stations are labelled A, B and C and the tracks are labelled t1 and t2. Track 1 (t1) runs between station A and station B and track 2 (t2) runs between station B and station C. Track t1 is 1000m long and track t2 is 500m long. In this simple case the model defining the tracks would solely consist of the set {t1, t2} where t1 and t2 are defined as follows:

$$t1 = \{A, B, [0,1000]\}$$

$$t2 = \{B, C, [0,500]\}$$

Thus, the model holds information about which stations each track connects and the distance of track there is between the stations. It is to be noted that the notation assumes that measurements commence from the first mentioned station to the second mentioned station. Thus, 0m along track 1 is station A and 1000m along track 1 is station B. A train travelling from B to A on track 1 would be travelling in the negative direction.

The position of the trains themselves are modelled as information about which track they are on and the distance along the track they are on. For example, a train on track t1 halfway between stations A, B (and therefore 500m from station A) would be modelled as:

$$train1 = (t1, 500)$$

This train position information would be linked with information regarding the time at which the position was measured. The information would therefore change with time as the train moves so that if the train was travelling from A to B the number "500" in the above notation would increase until it reaches "1000" (at which point the train is at station B).

If sophisticated predictions about the train motion are to be made, then it is necessary that information about where tracks meet or cross each other is stored. At such locations, it is generally possible for a train travelling on one track to either change tracks or carry on on the same track. A simple example is shown with reference to Figure 3. In Figure 3, stations A and B are connected by track t1 and stations C and D are connected by track t2. The tracks interconnect at a distance of p1 from station A along t1 and at a distance of p2 from station C along t2. A train travelling along track t1 in the direction of station B can either carry on down track t1 when it reaches Point1 or change tracks to track t2 towards station D. This railway point Point1 is modelled as:

$$Point1 = \{t1, t2, (p1, p2)\}$$

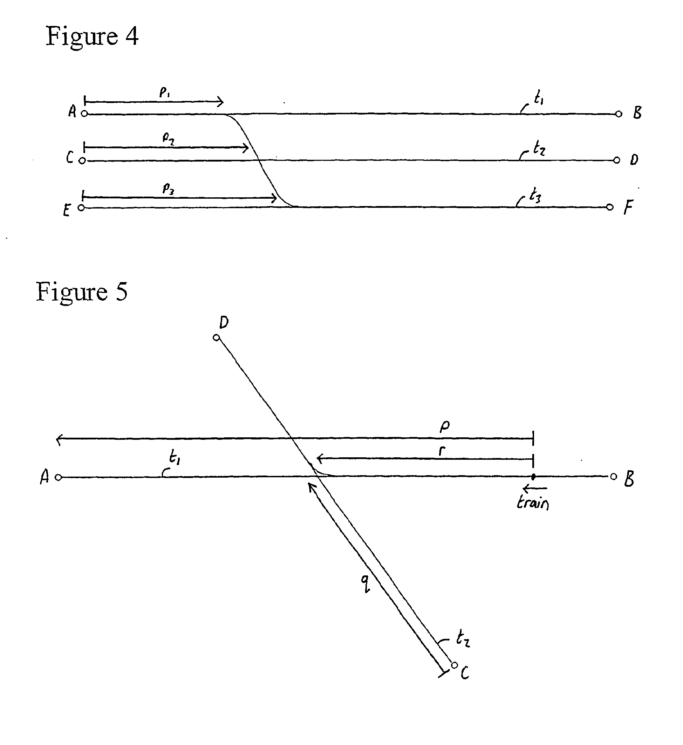

A more complicated point system is described with reference to Figure 4. In this example, three tracks are shown t1, t2 and t3. A train travelling from A to B on track t1 can either continue on track t1 or change to track t3 in the direction of station F. In the process of changing the train crosses t2 but it is not able to join track t2. Here, the point (labelled Point2) would be modelled as:

$$Point2 = \{t1, t2, t3, (p1, p2, p3)\}$$

Where p1, p2 and p3 denote the distance from the three stations A, C and E along the tracks t1, t2 and t3 respectively at which a train would be able to change over to track t1 to track t3 crossing track t2 on the way.

The above describes how the position of the tracks, trains and points is modelled. For a full model of the network system, it is necessary also to determine the state of the various components of the network. The state of the rail system would in general be modelled by the following set of data:

1) The state of all railway points indicating which track a train would end up on if it approached a point on a certain track.
2) The position of all active trains.

Regarding the state of the points Figure 3 shows a point system connecting track t1 and track t2 and which is referred to as Point1. The state of Point1 would be described by referring to what would happen to a train approaching Point1 on track t1 from station A. In this example, it is clear that the state of Point1 is described by a simple piece of information saying whether a train would stay on t1, or would change to track t2. In general, the state of the points is described by the following notation:

$$\{Point1, t1\ (A{\rightarrow}B)\ {\rightarrow}t2\ (C{\rightarrow}D)\}$$

The above expression indicates that a train travelling on track t1 in the direction of A to B would change to track t2 in a direction toward station D. The points also work in the opposite sense such that a train travelling from D to C along track t2 would change to track t1 in the direction towards A. In other words the above expression is equivalent to:

$$\{Point1, t2\ (D{\rightarrow}C)\ {\rightarrow}\ t1,\ (B{\rightarrow}A)\}$$

In the alternative state of the points a train travelling on track t1 from A to B would remain on track t1.

Point1 described above and illustrated in Figure 3 does not influence a train travelling from B or from C towards Point1 because in direction of travel the track does not diverge so there is no choice of possible routes. To enable a train travelling from B or from C to change track, another point would have to be provided and its state of switching track or not would be separately defined.

Regarding the state of the active trains, it is noted that an active train is one that is either moving or standing between two stations on one of the tracks. A train in a depot is not active. The state of the train is in general described by three data:-

a) position of the train at present (time = now), and at a number of equally spaced points in the recent past (now-1 time unit, now-2 time units,..., now-n time units, etc).
b) velocity of the train, described by a set of recent points in time and the corresponding positions of the train, and
c) acceleration of the train described by a set of recent points in time and corresponding positions.

These data can be stored as a table of the present and delayed train positions. These data can be used to obtain a table of differenced train positions as will be later described. In fact, only one table of data is required to be measured because velocity and acceleration data can be determined from the position data by appropriate differencing algorithms.

Once the state of the train network system has been ascertained and the present and delayed train positions, along with details on the state of the points which aid in predicting the trajectory of the trains is known, it is possible to make predictions as to the possibility or likelihood of a collision.

The predictions made can be used for purposes other than determining the possibility of a collision. For example, the velocity of the train can be predicted according to the method of the present invention and it can be determined whether the train is likely to exceed a certain speed limit for the piece of track that it is predicted to be on. In this case and also in the case of possible collisions, remedial action would be taken if an incident is predicted which would preferably be in the form of sending a message to the train to slow down in the form of a warning to the driver or an actual remote control message interlocked with the train braking system.

The central control server is operable to make a set of predictions of the future state of all active trains based on the present state of all active trains and the position of the points. Preferably, a special prediction method known as "ensemble prediction" is used. The prediction method uses the knowledge of previous positions of the same train, or perhaps trains of similar characteristics over the same or similar areas of track in order to yield a range of points at which the train could be located in some future interval of time and the collision detection algorithm checks to see if this range overlaps with the range of points calculated for any other train on the network at the same time point. Such prediction methods are disclosed in "Time Series: Forecasts in the Future and Understanding the Past", proceedings of the NATO Advanced research workshop on comparative time series by Weigend and Gershenfeld (Editor).

Traditional methods of prediction, based on either ordinary differential equations (smooth deterministic systems) or linear statistical techniques (for probabilistic systems) are not ideal for predicting collisions on rail networks. The preferred method of the present invention relies on a system in which it is not necessary to know the explicit form of the equations of motion. When a system has both deterministic and random components, it is in principle impossible to predict its precise future position. However, it is possible to predict an interval (or ensemble) in which the system will fall within certain probability bounds. These probability bounds can and should be made so small that they represent a virtual certainty that no collision will occur on the basis of the assumption that the underlying model of the train (i.e. the physical characteristics of the trains and their behaviour observed over long periods of time) is fundamentally accurate. The predicted interval has a size which is a function of the amplitude and other characteristics of the noise in the system. This method is suitable to the present invention because (a) it is not necessary to know the differential equations describing ideal or actual train motion and (b) the method for obtaining the trains position contains noise, not least due to the random offset inherent in the GPS signal.

The method yields an interval of possible values for the future position of the system. Thus, the method does not yield a precise future prediction but rather a whole interval of such positions.

The method of prediction later described relates to a certain fundamental theorem due to Takens (see F. Takens, "On the Numerical Determination of the Dimension of an Attractor"). This theorem applies to all systems which can be described in principle by knowledge of some finite set of observations all in some finite "observation space". In other words, the theorem can be applied to systems which in principle have a finite number of dimensions and are such that all observations lie in some compact subset of that space. The theorem states that it suffices to produce (almost) any sufficiently large set of observations about the system at time t in order to predict the system behaviour at some future time as well as if one had known the original state of the system.

It is therefore possible to use a one dimensional time series of observations (for example relating to the positions of a train) to "re-construct" a system equivalent to the actual system simply by using the observation at the present time and a certain number of observations in the recent past.

This general approach makes it possible to use any method of functional approximation to obtain a computational scheme for getting the prediction. Possible techniques for this are local linear predictions, neural networks (see James Freeman, "Simulating Neural Networks with Mathematica", Addison-Wesley 1994), splines (see W. Press et al, "Numerical Recipes in C", Cambridge University Press, 1998), wavelets (see Y. Meyer, "Wavelets and Applications", Springer 1992).

This ensemble prediction spans an entire interval of relevant time points [0,dt], where dt is some time interval chosen by the operator. By this, it is meant that for each interval of time between 0 and dt there is calculated a corresponding interval of train positions. Taking a very simple example, if an interval of time of 5 minutes is taken (dt = 5) and the train is travelling at constant speed equal to 30 m/s on a single track, the corresponding predicted interval of position (with a prediction based on future constant velocity being used) is [0, 9000m]. This is because the train will travel 9000m after 5 minutes at 30 m/s.

If the prediction model predicts that two trains will have the same, or an otherwise overlapping position interval on the same track for the same time period then a collision is predicted. Optionally, a prediction of near misses, (i.e. closely adjacent position intervals) may also be made so that a factor of safety can be built into the system. Clearly the longer the time intervals chosen, the larger the position intervals and the more chance of overlap. However, longer time intervals give rise to less accurate position intervals since any prediction algorithm is less accurate for events further in the future.

The prediction model used can take any suitable form. For example (as in the simple example above), it can be assumed that the train travels at its present velocity at a trajectory dictated by the rail points without accelerating or decelerating. This will yield a position interval of the train for the chosen time interval, the position intervals of all trains in the same time interval being compared to check for overlapping.

An upper bound prediction may be made by assuming all trains travel at their maximum velocity. This will give a position interval that is longer, or the same length as, the correct interval if it were calculated using the exact train speed and acceleration.

Figure 5 illustrates a situation where a train travels on track t1 from station B toward station A and changes at the point onto track t2 in the direction of station D. A time interval dt is allocated and it is assumed that the train travels at constant speed V for the whole of this period. The position of the train when the prediction is made is (t1, p) i.e. a distance p from station A and the position of the point is defined as:

$$Point1 = \{t1, t2, (r, q)\}$$

where r and q are the distances of Point1 along tracks t1 and t2 respectively.

If the train stays solely on track t1 for the interval dt (i.e. $(p-r)/V \leq dt$), then the position interval of the train will be:

$$train1 = [p, (p - vdt)]$$

If $(p-r)/V > dt$, the train will change tracks (assuming the state of Point 1 is {Point1, t1(B→A)→t2(C→D)} and the position interval will then be:

$$train1 = \{[p, r, t1], [q, q + V (dt - (p-r)/V ), t2]\}$$

Taking the example of a train travelling at 30 m/s 2.7 km from Point1 with dt = 3 minutes and assuming p = 8km and q = 4km. Here, (p-r) = 4km and V = 30 m/s, thus (p-r)/V = 2700/30 = 90s = 1.5 minutes which is < dt. Thus, the train will change tracks. The interval for train1 will therefore be:

$$train1= \{[8000, 5300, t1], [4000, 4000 + 30 (180 - (2700/30)), t2]\}$$
$$= \{[8000, 5300, t1], [4000, 6700, t2]\}$$

The interval of train 1 for the next 3 minutes is therefore from 8 km to 5.3 km on track t1 and from 4 km to 6.7 km on track t2.

The preferred method considers the train's trajectory as being on a real line, labelled by the tracks on which the train is travelling (as determined by the position of the points). The preferred prediction algorithm uses an ensemble prediction method to yield a range of possible positions on this real line. Actual positions may then be determined using an inverse mapping function. As an alternative to ensemble prediction, it is possible to use a simple system of ordinary differential equations to perform the necessary integrations and work out which track the train would be travelling on taking into account the positions of the points. The predicted motion of the train may be obtained using estimated position, velocity and acceleration only in practice. Methods for solving such differential equations are provided in "Differential Equations, Dynamical Systems, and Linear Algebra" by Hirsch and Smale, 1974.

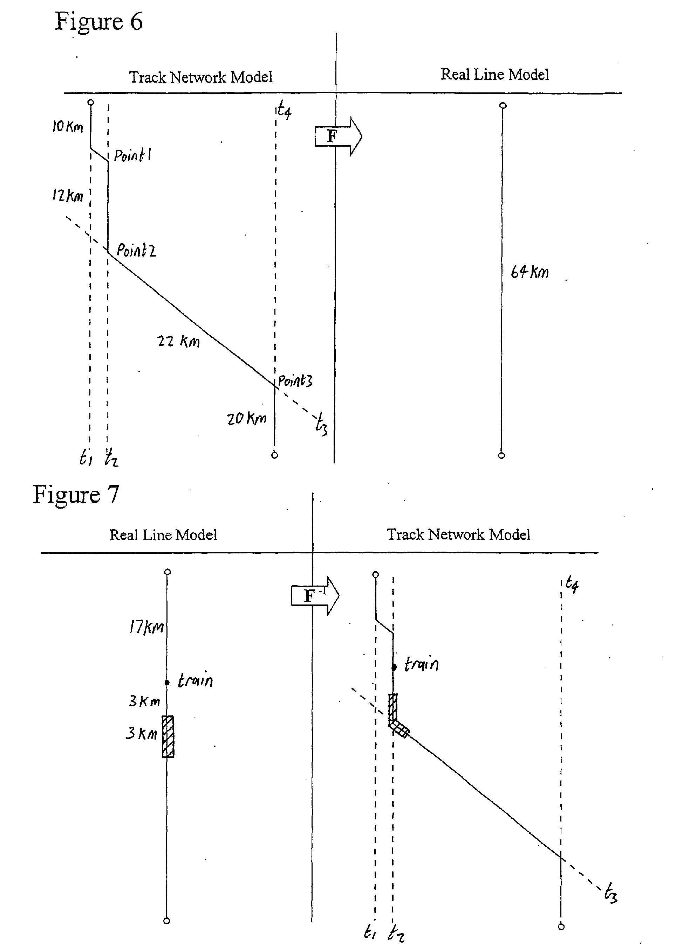

The concept of a real line will be explained with reference to Figure 6 of the accompanying drawings. On the left of Figure 6 is shown the modelled track layout comprising tracks and points. It is assumed that a particular train travels firstly on track t1 for 10 km before changing to track t2 at Point1. The train travels for a further 12 km before changing to track t3 at Point2. After travelling 22 km, the train changes to track t4 at Point3 whereupon it travels a further 20 km. The transformation labelled F in Figure 6 is used to convert this model into a more abstract model wherein the train travels on a single track for 64 km. An inverse transformation $F^{-1}$ exists which maps the real line back onto the track network. The transformation F and its inverse $F^{-1}$ are used to simplify the prediction algorithm. Thus, before prediction is attempted, the state of the various relevant points is ascertained and the trajectory of the train is calculated on the track network model. The present position of the train is determined and this position is mapped onto the real line model using transformation F. For example, suppose the train is located at track t2 7 km from Point1. This would be mapped as 17 km (7 km + 10 km) along the real line model. This is shown in Figure 7. Once the mapping of train position has been made, a time interval is chosen and a corresponding position interval is calculated. Suppose the time interval chosen is [5, 10] (i.e. the interval of time between (now + 5 minutes) and (now + 10 minutes). If a simple prediction based on present train speed is used and the speed is 10 m/s, then the position interval obtained will be [3 km, 6km] (i.e. the train will be between 3 and 6 km away during the time interval chosen). This position interval is shown in Figure 7.

This position interval is then mapped back onto the track network model using transformation $F^{-1}$. It can then be seen that this position interval maps onto the last 2 km of track t2 and the first 1km of track t3.

The advantage of mapping the model to a real-line model is that the methods of ensemble prediction can be applied to motion on a real line, with the results then reconverted to the actual model of the railway system using a mapping. The prediction method itself need not be concerned with which track the train is on and the state of any points since this is all taken care of by the transformation mapping F.

The above method describes how to obtain a set of points on the rail track system which cover the possible positions of the train during the time period between the time at which the prediction was made (0 minutes) and dt time units further on. This would be available for each train in the system and the control server simply checks for any overlap between the sets corresponding to any two or more trains.

In the case that an overlap is predicted, the server could communicate to one or any number of the trains to stop via the communication means. It is then possible to monitor the position data received to see whether the orders are being followed or not and to check the updated prediction collision. After the trains have stopped, and a prediction of collision no longer exists, it is preferable to send a "re-start signal" to each of the trains involved in the predicted collision so that the trains may continue on their journey. Preferably, these re-start signals are issued successively to ensure that a collision is not predicted due to the trains starting on their way simultaneously. It is preferable that one train is started first and is allowed to pass the predicted collision interval before the other train is started.

The choice of time period dt must be such that any remedial action is possible within the time period dt. For example, dt should allow time for transmission of information to and from the communication means, time for the driver to react to any stop instruction and time for the train to come to a complete halt. A margin of error should also be allowed to increase the safety of the system.

It is preferable for the system to be used in a way in which the time period dt can be dynamically set, so that the crude ensemble prediction, using the physical maximal speed limit of the train is not used when this would be impractical, for instance in the vicinity of a station. In fact, the time period dt may be determined by the speed at which trains are travelling which is itself a factor in determining the stopping time of the train.

The ensemble prediction method is preferred because it accounts for systems in which one does not know the "laws of motion" of the system under study. This prediction method uses past time and position histories to yield predictions for an interval of positions of the trains as a function of an interval of times.

The method uses a database of train positions built up over a period of time. More specifically, the method makes use of a database of differenced train positions (which can be derived from a database of absolute train positions). A "differenced train position" is a vector describing the amounts of track covered by a train in a series of certain time intervals. This vector can be easily derived from another vector which describes the absolute position of the train as it changes with time. For example, assume the following vector describes the absolute positions of the train (measured from an absolute datum) such that each entry in the vector represents the train's absolute position at one second intervals:

(0,1,2,4,7,11,13,14,14)

This is the vector of absolute train position. A vector of differenced train position may be obtained by taking the difference between adjacent terms like such:

([1-0], [2-1], [4-2], [7-4], [11 - 7], [13 - 11], [14 - 13], [14 - 14])

In other words:

(1,1,2,3,4,2,1,0) Since the difference in time between each successive point of the absolute train position vector is constant, the entries of the differenced train position vector are equal to the train's average speed in some particular time period.

As already mentioned, the controller of the present invention has access to a database of differenced train position vectors representing many different journeys on the tracks of the network. This database is referred to during the prediction process: It is to be noted that the database need not necessarily hold actual differenced train position values itself, any values (such as data of absolute train position) which allow differenced train position vectors to be extracted, may be used.

The method of predicting the train's position at time t + dt which is made at time t will be more precisely described below.

Firstly, a sampling frequency f is fixed. This frequency dictates how often the train is polled by the central controller to obtain its position.

This frequency may be fixed for the system at, say, 1 second or it can be variable depending upon the position or type of train or even external parameters.

One would also need to establish an "embedding dimension" d. This dimension d dictates how many samples are looked at at a time by the controller. The process of creating a d-dimensional series from a 1-dimensional series is referred to as "phase space reconstruction" or "embedding".

Thus, for any particular train, at any particular time, the controller would be in possession of a d-dimensional vector P(t) observed and recorded at time t. This would take the form:

$$P(t) = (x(t), x(t - f), x(t - 2f), .... x(t - (d - 1) f))$$

where x(t) represents the train's absolute position along the track at time t, x(t-f) represents the absolute position one sample earlier and so on.

Thus, for example, when f = 2 minutes, d = 4 and t = 6 pm, one would obtain:

$$P(6pm) = (x(6 \, pm), x(5.58 \, pm), x(5.56 \, pm), x(5.54 \, pm))$$

In other words, the controller would be in possession of the train's position at the present time and at three successive two minute intervals prior to the present time. This vector is often called the "d-dimensional time series", the "time series in embedding space" or the "embedded time series". All of these terms are equivalent and the entries in the vector P(t) are actually distance measurements.

The train obtains its own position preferably using a GPS receiver and transmits this to the central controller. Each train in the system would perform this procedure so that the controller is able to store a d-dimensional vector for time t (the present time) for each train in a dynamic array. The sampling frequency may be chosen depending on whether one wishes to obtain a fine prediction (eg across 3 minute prediction horizon) or a course prediction (eg across a half hour prediction horizon). In these cases, the frequency might be one second or twenty seconds respectively. The precise optimal choice of such frequency is a matter of trial and error. The "prediction horizon" is the period of time between the present time and the time for which a prediction is required.

In the following explanation, the train's position is measured along a one dimensional track. This is made possible using the mapping F already described. It should be borne in mind, however, that the train may be physically travelling on any particular track and may change track several times on its journey. The mapping F allows one to condense this physical complication into a simple one dimensional real line model.

A trivial example of an embedded time series will now be given. Assume a train is travelling from x = 0 at a constant speed of 1 metre per second and has its position (in metres) sampled every second. A vector of sampled positions taken after 10 seconds would be as follows:

(10, 9, 8, 7, 6, 5, 4, 3, 2, 1)

These are simply the positions of the train at the present time and at previous 1 second intervals before. The most recent data is given first. The differenced position vector at time t is in general given by the following formula:

$$([x(t) - x(t-1)], [x(t-1) - x(t-2)], ...., [x(t-n+1) - x(t-n)])$$

where n is one less than the total number of samples taken. In the present case, this expression has the value:

(1,1,1,1,1,1,1,1,1)

The d-dimensional differenced embedded time series is obtained by taking the first d values of this list. For example, the 3-dimensional differenced embedded time series for the time (t -1) is;

(1, 1, 1)

In this example, all the 3-dimensional embedded differenced time series for all times comprise 3 one's. For completeness they are listed below;

now: (1, 1, 1)
now-1: (1, 1, 1)

now-2: (1, 1, 1)
now-3: (1, 1, 1)
now-4: (1, 1, 1)
now-5: (1, 1, 1)
now-6: (1, 1, 1)

Such d-dimensional differenced embedded time series vectors are used because it is recognised that it is the step-by-step changes in position of the train and not absolute positions of the train which are important in terms of being able to predict future train positions. For example, if a train travels along a certain speed trajectory, it does not matter whether it does this in London or Birmingham if the track quality is similar. The presently described prediction algorithm thus only looks at the changes in train position and not the absolute train position. The absolute train position may become important when it is known that the track quality varies over the network. This will be described in more detail later.

In general, the ensemble prediction method comprises obtaining a d-dimensional differenced embedded time series vector for a train which is called the "predictee". The database of previous differenced embedded time series vectors is then searched for vectors already observed in the past which are similar to the predictee. The degree of similarity can be defined in numerous ways but one convenient way is to extract all the previous vectors having coordinates which are within a certain number of metres of the coordinates of the predictee.

This degree of similarity is defined by an "observation diameter epsilon." This parameter defines how close the word "close" means. This is because the prediction method consists in looking up, in a database of past d-dimensional observations of previous train's differenced positions, any data points which are "close to" the present data point. Intuitively, a small epsilon means that there is a more stringent criterion for defining two points as "similar" or "close to" each other. Hence, a small epsilon means that only points which are practically the same will be classed as such. On the other hand, a small epsilon means that fewer data points are likely to be found near any other given point and hence the forecast will be less reliable from a statistical point of view. The choice of epsilon is a practical trade off determined by trial and error. For example, suppose the following vector is the predictee:

(1,1,1)

Suppose the database holds the following three vectors:

(0.6, 1.5, 1.2)
(0.1, 0.8, 0.9)
(1.2, 1.8, 0.9)

Now suppose the observation diameter epsilon is 0.7. The method comprises checking for stored vectors having vector entries within 0.7 of the corresponding vector entries of the predictee. If such a vector is found, it is considered to be "similar" or "close" to the predictee. In this example, only the vector (0.6, 1.5, 1.2) will be considered "close" because the others contain data entries differing from the corresponding data entry in the predictee by.a value exceeding the observation diameter epsilon.

In general, the vectors retrieved from the database will be smaller portions of larger vectors representing an entire previous train journey. For example, the vector extracted from the database in the above example may be part of a larger journey having a complete differenced embedded time series as such:

(2.2, 2.5, 1.9, 1.4, 0.6, 1.5, 1.2)

A crude prediction of the train position one second in the future would then be given by simply looking at the differenced data stored in the extracted data item. The entry one second further on from the data item which corresponds to the last data item of the predictee is looked at. In other words, since the predictee corresponds to the part of the vector (0.6, 1.5, 1.2) which was extracted from the database, a prediction can be determined by looking at the next data item in the future, in this case 1.4. The differenced time series for the present train would then be presumed to be:

(1.4,1,1,1)

which translates to an absolute train position vector of:

(11.4, 10, 9, 8, 7)

in other words, the train's position would be predicted to be 11.4 metres from the absolute datum at one second in the future. In this example the ensemble reduces to a point because only one data vector was extracted from the database in this particular example

Of course, this example is very simple in order to aid in the understanding of the invention. In reality, a value for d of more than 3 would be chosen and many vectors would be extracted from the database that are close to the d-dimensional predictee. The next entry from each of these vectors would be looked at and the highest and lowest would be identified so as to obtain a range of possible train positions in the future. This is explained in more detail below.

It is also to be noted that it is not necessary that only the next entry in the extracted data vector is looked at. An entry any number of samples forward in time could be examined. For example, if it is necessary to obtain a prediction of the train's position in 4 seconds time using the example above, the next four values would be taken from the extracted data item and added to the predictee so as to obtain:

(2.2, 2.5, 1.9, 1.4, 1, 1, 1)

This gives a predicted train position of (10 + 1.4 + 1.9 + 2.5 +2.2) = 18 metres. In a similar way, the train's position after 3 seconds, 2 seconds etc can be obtained. The above method gives the train's position after 3 seconds as 15.8 metres and after 2 seconds as 13.3 metres. Of course, the further away in time that a prediction is, the less accurate it will be, since there will be more time for the train in question to do something differently to the trains whose position created the stored database data. However, if the database is large enough so as to store the data corresponding to a great many journeys, many points will be extracted as being similar to the predictee and a range of possible positions can be given for the future position of the train with a relative degree of certainty.

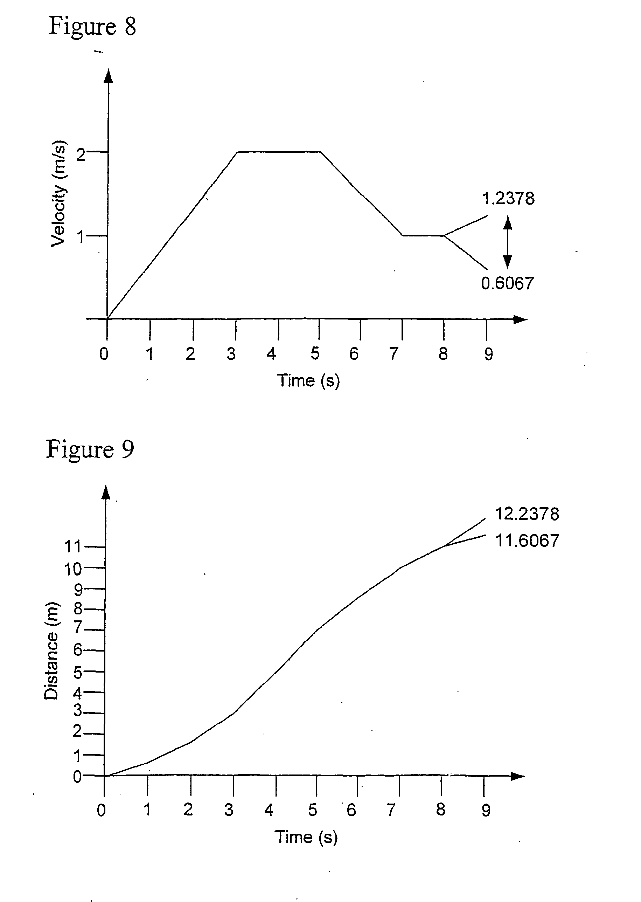

The present invention will now be described by way of a specific example. Firstly, consider the velocity profile shown in Figure 8. As can be seen, the train accelerates to 2 metres per second in the first three seconds, travels constantly at this speed for two seconds and then decelerates to 1 metre per second over the next 2 seconds where it stays for a further second. Figure 9 is a graph showing the absolute position of the train as it moves. Suppose we examine what happens when it is required to make a prediction of the train's position in one second at a time of t=8 seconds. At this point in time, the past history of train positions is given as:

(11, 10, 8.75, 7, 5, 3, 1.33, 0.33)

The corresponding differenced time series vector will be:

(1, 1.25, 1.75, 2, 2, 1.66, 1)

It can be seen from Figure 7 that this vector corresponds closely to the average speed of the train at a point midway between adjacent data entries.

An embedding dimension d of 5 will be chosen for this example. Thus, the 5-dimensional differenced embedded time series vector is:

(1, 1.25, 1.75, 2, 2)

This vector is the predictee used in the prediction process.

We now assume we have a database of past trajectories which not only correspond to a succession of time points similar to the succession of time points in the predictee (ie every one second) but also comprise additional differenced position data for time points in the future. Our assumed database is represented in the matrix below:

| t | t-1 | t-2 | t-3 | t-4 | t+1 |
|---|---|---|---|---|---|
| 0.3081 | 0.7572 | 1.6665 | 1.8042 | 1.0224 | 0.9738 |
| 0.8606 | 1.2352 | 1.1094 | 1.2623 | 1.9732 | 1.2378 |
| 0.1067 | 0.4861 | 1.1673 | 1.3146 | 1.0329 | 0.7897 |
| 0.2228 | 0.6396 | 0.7614 | 1.9517 | 1.0146 | 1.1353 |
| 0.0875 | 0.5845 | 1.2877 | 1.9517 | 1.5396 | 0.5400 |
| 0.7106 | 0.5549 | 1.4907 | 1.2868 | 1.2796 | 0.6067 |
| 0.3777 | 0.2602 | 1.5976 | 1.7967 | 1.1807 | 1.2816 |
| 0.4615 | 1.0598 | 1.1505 | 1.7077 | 1.9087 | 0.8332 |
| 0.1159 | 0.6344 | 1.7036 | 1.0481 | 1.8310 | 0.5133 |
| 0.3886 | 0.4027 | 1.6359 | 1.3508 | 1.8852 | 0.8666 |

(continued)

| t | t-1 | t-2 | t-3 | t-4 | t+1 |
|---|-----|-----|-----|-----|-----|
| 0.3168 | 1.1167 | 1.2859 | 1.9287 | 1.4188 | 0.7740 |
| 0.7447 | 1.0115 | 1.7340 | 1.6153 | 1.2427 | 0.7648 |
| 0.5919 | 1.0543 | 1.2378 | 1.2867 | 1.1326 | 0.5982 |
| 0.0052 | 0.3833 | 1.2642 | 1.0967 | 1.9797 | 0.7032 |
| 0.0559 | 1.2092 | 1.4643 | 1.3227 | 1.4138 | 1.2750 |

The above matrix represents the entire database of stored points. The last column of the matrix shows the points stored for the time slot after the time slot represented by the first column (which corresponds to the most recent time slot in the predictee).

The extraction process comprises choosing an observation diameter epsilon which determines how close stored data points must be in order for them to be used. In this example we will use an observation diameter epsilon of 0.79. All stored vectors whose individual entries differ from the corresponding individual entries of the predictee by a value exceeding 0.79 are discounted. Applying this in the present case leaves the following matrix:

| t | t-1 | t-2 | t-3 | t-4 | t+1 |
|---|-----|-----|-----|-----|-----|
| 0 | 0 | 0 | 0 | 0 | 0 |
| 0.8606 | 1.2352 | 1.1094 | 1.2623 | 1.9732 | 1.2378 |
| 0 | 0 | 0 | 0 | 0 | 0 |
| 0 | 0 | 0 | 0 | 0 | 0 |
| 0 | 0 | 0 | 0 | 0 | 0 |
| 0.7106 | 0.5549 | 1.4907 | 1.2868 | 1.2796 | 0.6067 |
| 0 | 0 | 0 | 0 | 0 | 0 |
| 0.4615 | 1.0598 | 1.1505 | 1.7077 | 1.9087 | 0.8332 |
| 0 | 0 | 0 | 0 | 0 | 0 |
| 0 | 0 | 0 | 0 | 0 | 0 |
| 0.3168 | 1.1167 | 1.2859 | 1.9287 | 1.4188 | 0.7740 |
| 0.7447 | 1.0115 | 1.7340 | 1.6153 | 1.2427 | 0.7648 |
| 0 | 0 | 0 | 0 | 0 | 0 |
| 0 | 0 | 0 | 0 | 0 | 0 |
| 0 | 0 | 0 | 0 | 0 | 0 |

In order to obtain a prediction, the column representing "t+1" is interrogated. The ensemble prediction is made by looking at the range of values occurring in this column of the matrix. In this case the values lie in the interval [0.6067-1.2378]. The controller is therefore able to conclude that, on the basis of past data, the value for the future position of the train, in one second's time will be given by the interval between 0.6067 and 1.2378. This corresponds to a possible range of absolute positions of [11.6067-12.2378]. This interval is shown graphically in Figure 9.

If necessary it is possible to make a point prediction rather than an ensemble prediction by taking an average of all of the future predictions given by each data vector extracted from the database. In the above example, this point would be the average of 1.2378, 0.6067, 0.8332, 0.7740 and 0:7648 which is 0.8433. Alternatively, a point prediction can be obtained by taking the simple average of the lowest and highest figure obtained. In the above example this point prediction would be the average of 1.2378 and 0.6067 which is 0.9223.

It can be seen, therefore, that the above method can be used for each train on the network to predict a possible range of positions at the certain time point anywhere in the future. These ranges of 1-dimensional positions can then be converted to a range of physical positions using the mapping $f^1$ as shown in Figure 7. It can then be ascertained whether any of the predicted physical positions for one train overlap with any of the predicted physical positions for another train on the network. If this is the case, appropriate action can be taken to remedy the situation. For example, one or both trains could be ordered to slow down so that its trajectory changes and the predicted range of physical positions changes accordingly.

The method of searching the database may advantageously take the form of cross-correlating the predictee with the entire database. The resulting correlation data can be examined to see which parts of the database have the highest correlation with the predictee and these can be extracted. Then, predictions can be based on data extracted from those parts of the database which represent the appropriate forward-in-time position for each identified point of the database. Another method to compare the predictee with the database is to firstly compare the first coordinate of the predictee with the entire database of stored coordinates. Then stored coordinates within the observation diameter epsilon of the coordinates of the predictee can be identified. Next, the second coordinate of the predictee is compared with the coordinates immediately following the identified coordinates. This carries on until all the coordinates of the predictee have been compared. The method identifies stored coordinate strings having coordinates that are each within the observation diameter epsilon of the respective predictee coordinates.

The method of ensemble prediction may be thought of as a way to use prior knowledge of how trains have reacted in the past in order to predict any train's actions in the future. The method of extracting similar vectors from a database may be likened to comparing the present trains velocity curve with a set of stored velocity curves. Any stored velocity curves which are similar to the velocity curve of the train under consideration will be examined and a range of velocity data at a point of time in the future can be obtained. The use of an observation diameter epsilon in matching velocity trajectories is only one way of sorting the database. Any known curve matching method could be used to the same effect, as long as such a method is based on a topology derived from the usual metric on Euclidean spaces.

A refinement of the above system is to store in the central data base a track classification which can be used in the prediction process. For example, part of the track might be very old, and uneven, and hence one would expect the train to move differently, brake more slowly, etc. This can be reflected in the prediction algorithm by defining grades of track. For example, portions of track could be designated Grade A, Grade B, etc and the database used for predicting the motion of the train might draw only on past data points drawn from the same type of track. In other words, different databases would be built up for different track grades. If it is determined that a train is travelling on a certain grade of track, only previous trajectories recorded for the same type of track are used to provide the prediction.

This may be done by coding the predictee and stored vectors as above, with an extra type classification of the track as a last coordinate. The definition of distance may be changed by adding an infinite term to any pair of data points with different type classification coordinates. Adding such an infinite term would effectively disqualify the data from being considered.

As well as quality of track, further coordinates such as the distance of the train from the next railway point could be considered. These may be relevant for the prediction because it can be assumed that part of the deterministic data that determines the train's progress is the information about when it needs to cross a point or what the quality of line is, which is associated with friction and possible instability of motion.

A further refinement is to label certain parts of the track in terms of a speed limit. The speed limits for a particular track would be an extra coordinate in the track definition vector, $t_1$. The ensemble prediction method can be used to predict the velocity of the train in the future (as shown in Figure 8) and it can be determined whether this velocity is likely or possible to exceed the track speed limit at the part of the track from which the prediction is made. If so, appropriate remedial action can be taken.

There is a choice as to how to build up the empirical database used for predictions. For example, the database could be quite segregated so that a certain train travelling on a certain track quality will have its trajectory compared only with trajectories obtained from similar trains travelling on similar tracks. Alternatively, one can use data obtained from a whole host of trains on a whole series of tracks when making any particular prediction. It is an empirical question as to how precisely one should segregate the data so as to "learn" a good prediction method.

The above described method works well both when movement is easily predictable and when it is more erratic. It is expected that the predicted intervals will be very accurate when the method is applied to a real train network.

As can be seen from the above, the present invention provides a system which uses relatively simple and commonly known components to avoid train collisions. Mobile telephones and GPS receivers have been commercially available for some time and the cost of such devices is small compared to the cost of installing ATP. By using a central server which monitors the position of all the trains, intelligent action can be taken to minimise the possibility of collisions and to minimise disruption to the service. Furthermore, the system can be completely automated by operationally linking the communication means with the train's power system so that the train may be stopped by remote control.

It is to be noted that the present invention does not rely at all on the existing signal system which is known to be unreliable and prone to fault. Since there are substantially no mechanical moving parts involved, the present system is extremely reliable and requires little maintenance once set up.

The present invention could be used to replace the present signalling system and conventional signalling could be phased out as the invention is more widely used.

The instruction to stop issued to the communication means in the event that a collision is predicted could be relayed via aural or visual means on the train and may be issued for the attention of the driver or another person situated in the train cabin whose job it is to monitor the mobile telephone acting as the communication means. The instruction could be issued to all drivers involved in a predicted collision, or just a subset of all drivers. Independent alerts in the manner of the present invention markedly decrease the likelihood of an actual crash since it is generally necessary that at least two of the drivers warned must ignore the warning for a crash to occur (which is the square of the probability of one driver ignoring a warning), and in any event the present invention can provide for an automated link between the controller and the braking system of the train. This contrasts with previous systems (such as ATP) wherein only one driver is warned that a collision is possible.

A further advantage of the invention is that it can be implemented quickly without a need to modify the train or track infrastructure.

**Claims**

1. A method of determining if a train collision is possible, said method comprising the steps of:

    obtaining data relating to the position of a train;
    transmitting said data to a controller;
    receiving said data at said controller;
    performing a calculation at said controller using said data to predict a position of said train at a future time; and
    using said predicted future position to determine whether any action needs to be taken.

2. A method according to claim 1, wherein said calculation includes deriving differenced position vectors from said position data, said differenced position vectors having vector coordinates representing the difference between two consecutive coordinates in a vector of said position data.

3. A method according to claim 1 or 2, wherein said calculation includes referring to a database of stored data relating to previous train journeys and identifying in said database vectors similar to a present journey vector, wherein said present journey vector is either said position data or differenced position vectors derived from said position data, said differenced position vectors having vector coordinates representing the difference between two consecutive coordinates in a vector of said position data.

4. A method according to claim 3, wherein said database is a database of stored differenced position vectors.

5. A method according to claim 3, wherein said database is a database of stored position vectors.

6. A method according to any one of claims 3 to 5 wherein said step of identifying similar vectors comprises evaluating whether the magnitude of a further vector obtained by subtracting a potentially similar vector in said database from said present journey vector is less than some prescribed positive number.

7. A method according to any one of claims 3-6, wherein said calculation includes extracting from said database predictive data, said predictive data being data recorded a particular period of time after said data identified as similar.

8. A method according to claim 7, further comprising the step of adding the same number to each coordinate of said extracted predictive data vector so as to translate it by the amount of the number added.

9. A method according to claim 8, wherein said number added corresponds to the current train position.

10. A method according to any one of claims 7 to 9, wherein a set of predictive data is extracted, said set having a maximum value and a minimum value for any given particular period of time.

11. A method according to claim 10, wherein said minimum and maximum values represent a range of possible train positions at said future time.

12. A method according to any preceding claim, wherein said steps of obtaining data relating to the position of the train and transmitting said data to said controller are carried out a plurality of times for a plurality of respective trains and said controller determines if a collision is possible based on a prediction of a future position of said plurality of trains.

13. A method according to claim 12, wherein said step of predicting a future train position is a step in which a plurality of intervals of future possible train positions for a plurality of respective trains is predicted in accordance with the method of claim 8; and
    said step of determining if a collision is possible comprises determining whether at least some of said plurality of predicted intervals of possible train positions for said plurality of trains overlap.

**14.** A method according to any preceding claim, further comprising the step of:

transmitting a warning signal to said train if it is determined that a collision is possible.

**15.** A method according to any preceding claim, said method further comprising:

transmitting a stop message to said train if it is determined that a collision is possible.

**16.** A method according to claim 15, further comprising the step of:

automatically stopping said train when said stop message is received from said controller.

**17.** A method according to any preceding claim, wherein said step of determining a position of the train uses signals transmitted from GPS satellites.

**18.** A method according to any preceding claim, wherein said transmitting and receiving steps are carried out using an electronic communications network.

**19.** A method according to any preceding claim, wherein said transmitting and receiving steps are carried out using Internet protocols within a extranet structure.

**20.** A method according to any preceding claim, wherein said step of transmitting said data to said controller is carried out using a mobile telephone.

**21.** A method according to any preceding claim, wherein said obtained data relating to a position of a train is converted to position data along a real line model.

**22.** A method according to claim 21, wherein said calculation performed at said controller predicts a future position, or range of future positions, along said real line model.

**23.** A method according to claim 22, wherein said predicted position, or said range of predicted positions, is converted to data representing a position, or range of positions, on said track network.

**24.** Apparatus for determining the possibility of a train collision, said apparatus comprising first means situated on said train and second means situated remote from said train;
said first means comprising:

position determining means for determining the position of said train;
communication means operatively linked to said position determining means for transmitting the position determined by said position determining means; said second means comprising:

receiving means for receiving said determined position from said communication means;
prediction means for predicting a future position of said train based on said received determined position; and
collision determining means for determining whether a collision is possible based on the result of said prediction means.

**25.** Apparatus according to claim 24, wherein said second means further comprises a database of stored data relating to previous train journeys.

**26.** Apparatus according to claim 25, wherein said prediction means comprises:

identifying means for identifying stored data which is similar to said determined position or is similar to data derived from said determined position.

**27.** Apparatus according to claim 26, wherein said prediction means further comprises:

extracting means for extracting predictive data, said predictive data having originally been obtained at a future time to said identifying stored data.

**28.** Apparatus according to claim 27, wherein said extracting means is for extracting a set of predictive data, said set having a minimum and maximum value.

**29.** Apparatus according to claim 28, wherein said set defines a range of predicted future positions for said train.

**30.** Apparatus according to claim 29, wherein said collision determining means uses a plurality of said sets of predictive data obtained for different trains and determines a collision is possible when at least two of said sets overlap.

**31.** Apparatus according to any one of claims 24 to 30, wherein said position determining means comprises a GPS receiver.

**32.** Apparatus according to any one of claims 24 to 31, wherein said communication means comprises a mobile telephone.

**33.** Apparatus according to any one of claims 24 to 32, wherein said communication means comprises a portable computer having a modem.

**34.** Apparatus according to any one of claims 24 to 33, further comprising means at said second means for transmitting a message to said first means.

**35.** Apparatus according to claim 34, wherein said message comprises a warning message.

**36.** Apparatus according to claim 34, wherein said message comprises a stop message.

**37.** Apparatus according to claim 24 to 36, further comprising means at said second means for transmitting a re-start signal when it is determined that it is safe for a stopped train to start.

**38.** Apparatus according to claim 37, further comprising means at said first means for re-starting a stopped train upon receipt of a received re-start signal.

**39.** A memory means storing computer readable instructions which, when connected to a suitable computer, is operable to cause said computer to carry out the following method:

receive data from a plurality of trains, said data relating to a determined position of said respective train;
accessing a database available to said computer, said database containing information about the train network on which said train is located;
calculating, using said received position data and said network database, the position of each train on a track of said network;
predicting the position of each train at a point in time in the future; and determining if a collision between two or more of said plurality of trains is possible using said predicted future positions.

**Patentansprüche**

**1.** Verfahren zum Bestimmen, ob eine Zugkollision möglich ist, wobei das Verfahren die folgenden Schritte umfasst:

Erhalten von Daten, die auf die Position eines Zugs bezogen sind;
Übertragen der Daten an eine Steuereinheit;
Empfangen der Daten bei der Steuereinheit;
Ausführen einer Berechnung in der Steuereinheit unter Verwendung der Daten, um eine Position des Zugs zu einer künftigen Zeit vorherzusagen; und
Verwenden der vorhergesagten künftigen Position, um zu bestimmen, ob irgendeine Maßnahme ergriffen werden muss.

**2.** Verfahren nach Anspruch 1, bei dem das Berechnen das Ableiten von Differenzpositionsvektoren aus den Positionsdaten umfasst, wobei die Differenzpositionsvektoren Vektorkoordinaten besitzen, die die Differenz zwischen zwei aufeinander folgenden Koordinaten in einem Vektor der Positionsdaten repräsentieren.

**3.** Verfahren nach Anspruch 1 oder 2, bei dem das Berechnen die Bezugnahme auf eine Datenbank von gespeicherten Daten, die auf frühere Zugfahrten bezogen sind, und das Identifizieren von Vektoren, die zu einem momentanen Fahrtvektor ähnlich sind, in der Datenbank, wobei der momentane Fahrtvektor entweder die Positionsdaten oder Differenzpositionsvektoren, die aus den Positionsdaten abgeleitet sind, bildet, wobei die Differenzpositionsvektoren Vektorkoordinaten besitzen, die die Differenz zwischen zwei aufeinander folgenden Koordinaten in einem Vektor der Positionsdaten repräsentieren.

**4.** Verfahren nach Anspruch 3, bei dem die Datenbank eine Datenbank gespeicherter Differenzpositionsvektoren ist.

**5.** Verfahren nach Anspruch 3, bei dem die Datenbank eine Datenbank gespeicherter Positionsvektoren ist.

**6.** Verfahren nach einem der Ansprüche 3 bis 5, bei dem der Schritt des Identifizierens ähnlicher Vektoren das Bewerten, ob die Größe eines weiteren Vektors, der durch Subtrahieren eines potentiell ähnlichen Vektors in der Datenbank von dem momentanen Fahrtvektor erhalten wird, kleiner als irgendeine vorgeschriebene positive Zahl ist, umfasst.

**7.** Verfahren nach einem der Ansprüche 3-6, bei dem das Berechnen das Extrahieren von Vorhersagedaten aus der Datenbank umfasst, wobei die Vorhersagedaten Daten sind, die in einer bestimmten Zeitperiode nach der Identifizierung der Daten als ähnlich aufgezeichnet worden sind.

**8.** Verfahren nach Anspruch 7, das ferner den Schritt des Addierens derselben Zahl zu jeder Koordinate des extrahierten Vorhersagedatenvektors umfasst, um ihn so um den Betrag der addierten Zahl translatorisch zu verschieben.

**9.** Verfahren nach Anspruch 8, bei dem die addierte Zahl der momentanen Zugposition entspricht.

**10.** Verfahren nach einem der Ansprüche 7 bis 9, bei dem eine Menge von Vorhersagedaten extrahiert wird, wobei die Menge für jede gegebene bestimmte Zeitperiode einen Maximalwert und einen Minimalwert hat.

**11.** Verfahren nach Anspruch 10, bei dem der Minimalwert und der Maximalwert einen Bereich möglicher Zugpositionen zu der künftigen Zeit repräsentieren.

**12.** Verfahren nach einem vorhergehenden Anspruch, bei dem die Schritte des Erhaltens von Daten, die auf die Position des Zugs bezogen sind, und des Übertragens der Daten an die Steuereinheit mehrmals für mehrere entsprechende Züge ausgeführt werden und die Steuereinheit auf der Grundlage einer Vorhersage einer künftigen Position der mehreren Züge feststellt, ob eine Kollision möglich ist.

**13.** Verfahren nach Anspruch 12, bei dem der Schritt des Vorhersagens einer künftigen Zugposition ein Schritt ist, in dem mehrere Intervalle künftiger möglicher Zugpositionen für mehrere entsprechende Züge in Übereinstimmung mit dem Verfahren nach Anspruch 8 vorhergesagt werden; und
der Schritt des Bestimmens, ob eine Kollision möglich ist, das Bestimmen, ob wenigstens einige der mehreren vorhergesagten Intervalle möglicher Zugpositionen der mehreren Züge überlappen, umfasst.

**14.** Verfahren nach einem vorhergehenden Anspruch, das ferner den folgenden Schritt umfasst:

Übertragen eines Warnsignals an den Zug, falls festgestellt wird, dass eine Kollision möglich ist.

**15.** Verfahren nach einem vorhergehenden Anspruch, wobei das Verfahren ferner umfasst:

Übertragen einer Anhaltenachricht an den Zug, falls festgestellt wird, dass eine Kollision möglich ist.

**16.** Verfahren nach Anspruch 15, das ferner den folgenden Schritt umfasst:

automatisches Anhalten des Zugs, wenn die Anhaltenachricht von der Steuereinheit empfangen wird.

**17.** Verfahren nach einem vorhergehenden Anspruch, bei dem der Schritt des Bestimmens einer Position des Zugs Signale verwendet, die von GPS-Satelliten übertragen werden.

**18.** Verfahren nach einem vorhergehenden Anspruch, bei dem die Sende- und Empfangsschritte unter Verwendung eines elektronischen Kommunikationsnetzes ausgeführt werden.

**19.** Verfahren nach einem vorhergehenden Anspruch, bei dem die Sende- und Empfangsschritte unter Verwendung von Internetprotokollen in einer Extranet-Struktur ausgeführt werden.

**20.** Verfahren nach einem vorhergehenden Anspruch, bei dem der Schritt des Übertragens der Daten an die Steuereinheit unter Verwendung eines Mobiltelephons ausgeführt wird.

**21.** Verfahren nach einem vorhergehenden Anspruch, bei dem die erhaltenen Daten, die auf eine Position des Zugs bezogen sind, in Positionsdaten längs eines Reallinienmodells umgesetzt werden.

**22.** Verfahren nach Anspruch 21, bei dem die Berechnung, die in der Steuereinheit ausgeführt wird, eine künftige Position oder einen Bereich künftiger Positionen längs des Reallinienmodells vorhersagt.

**23.** Verfahren nach Anspruch 22, bei dem die vorhergesagte Position oder der Bereich vorhergesagter Positionen in Daten umgesetzt wird, die eine Position oder einen Bereich von Positionen auf dem Schienennetz repräsentieren.

**24.** Vorrichtung zum Bestimmen der Möglichkeit einer Zugkollision, wobei die Vorrichtung erste Mittel, die sich in dem Zug befinden, und zweite Mittel, die sich entfernt von dem Zug befinden, umfasst;
wobei die ersten Mittel umfassen:

Positionsbestimmungsmittel, um die Position des Zugs zu bestimmen;
Kommunikationsmittel, die mit den Positionsbestimmungsmitteln funktional verbunden sind, um die durch die Positionsbestimmungsmittel bestimmte Position zu übertragen;

und wobei die zweiten Mittel umfassen:

Empfangsmittel, um die bestimmte Position von den Kommunikationsmitteln zu empfangen;
Vorhersagemittel, um eine künftige Position des Zugs anhand der empfangenen bestimmten Position vorherzusagen; und
Kollisionsbestimmungsmittel, um anhand des Ergebnisses der Vorhersagemittel zu bestimmen, ob eine Kollision möglich ist.

**25.** Vorrichtung nach Anspruch 24, bei der die zweiten Mittel ferner eine Datenbank aus gespeicherten Daten, die auf frühere Zugfahrten bezogen sind, umfassen.

**26.** Vorrichtung nach Anspruch 25, bei der die Vorhersagemittel umfassen:

Idehtifzierungsmittel, um gespeicherte Daten zu identifizieren, die der bestimmten Position oder Daten, die aus der bestimmten Position abgeleitet worden sind, ähnlich sind.

**27.** Vorrichtung nach Anspruch 26, bei der die Vorhersagemittel ferner umfassen:

Extraktionsmittel, um Vorhersagedaten zu extrahieren, wobei die Vorhersagedaten ursprünglich zu einer künftigen Zeit in Bezug auf die identifizierten gespeicherten Daten erhalten worden sind.

**28.** Vorrichtung nach Anspruch 27, bei der die Extraktionsmittel dazu dienen, eine Menge Vorhersagedaten zu extrahieren, wobei die Menge einen Minimalwert und einen Maximalwert besitzt.

**29.** Vorrichtung nach Anspruch 28, bei der die Menge einen Bereich vorhergesagter künftiger Positionen für den Zug definiert.

**30.** Vorrichtung nach Anspruch 29, bei der die Kollisionsbestimmungsmittel mehrere dieser Mengen von Vorhersagedaten, die für verschiedene Züge erhalten werden, verwenden und Feststellen, dass eine Kollision möglich ist, wenn wenigstens zwei der Mengen überlappen.

**31.** Vorrichtung nach einem der Ansprüche 24 bis 30, bei der die Positionsbestimmungsmittel einen GPS-Empfänger umfassen.

**32.** Vorrichtung nach einem der Ansprüche 24 bis 31, bei der die Kommunikationsmittel ein Mobiltelephon umfassen.

**33.** Vorrichtung nach einem der Ansprüche 24 bis 32, bei der die Kommunikationsmittel einen tragbaren Computer, der ein Modem besitzt, umfassen.

**34.** Vorrichtung nach einem der Ansprüche 24 bis 33, die ferner Mittel bei den zweiten Mitteln umfasst, um eine Nachricht an die ersten Mittel zu übertragen.

**35.** Vorrichtung nach Anspruch 34, bei der die Nachricht eine Warnnachricht umfasst.

**36.** Vorrichtung nach Anspruch 34, bei der die Nachricht eine Anhaltenachricht umfasst.

**37.** Vorrichtung nach Anspruch 24 bis 36, die ferner Mittel bei den zweiten Mitteln umfasst, um ein Neustartsignal zu übertragen, wenn festgestellt wird, dass ein angehaltener Zug sicher starten kann.

**38.** Vorrichtung nach Anspruch 37, die ferner Mittel bei den ersten Mitteln umfasst, um einen angehaltenen Zug bei Empfang eines empfangenen Neustartsignals wieder zu starten.

**39.** Speichermittel, das computerlesbare Befehle speichert und, wenn es mit einem geeigneten Computer verbunden ist, so betreibbar ist, dass es den Computer dazu veranlasst, das folgende Verfahren auszuführen:

Empfangen von Daten von mehreren Zügen, wobei die Daten auf eine bestimmte Position des jeweiligen Zugs bezogen sind;
Zugreifen auf eine Datenbank, die für den Computer verfügbar ist, wobei die Datenbank Informationen über das Zugschienennetz, auf dem sich der Zug befindet, enthält;
Berechnen unter Verwendung der empfangenen Positionsdaten und der Schienennetzdatenbank der Position jedes Zugs auf einem Gleis des Schienennetzes;
Vorhersagen der Position jedes Zugs zu einem künftigen Zeitpunkt; und
Feststellen, ob eine Kollision zwischen zwei oder mehr der mehreren Züge möglich ist, unter Verwendung der vorhergesagten künftigen Positionen.

**Revendications**

**1.** Procédé pour déterminer si une collision de train est possible, ledit procédé comprenant les étapes consistant à :

obtenir des données concernant la position d'un train ;
transmettre lesdites données à un système de contrôle;
recevoir lesdites données audit système de contrôle ;
exécuter des calculs audit système de contrôle en utilisant lesdites données pour prédire une position dudit train à un temps ultérieur ; et
utiliser la position ultérieure prédite pour déterminer si une mesure doit être prise.

**2.** Procédé selon la revendication 1, dans lequel lesdits calculs comprennent la dérivation de vecteurs de position différenciée à partir desdites données de position, lesdits vecteurs de position différenciée ayant des coordonnées de vecteur représentant la différence entre deux coordonnées consécutives dans un vecteur desdites données de position.

**3.** Procédé selon la revendication 1 ou 2, dans lequel lesdits calculs incluent la référence à une base de données contenant des données enregistrées concernant des trajets précédents de train et l'identification dans ladite base de données de vecteurs semblables à un vecteur de trajet actuel, dans lequel ledit vecteur de trajet actuel est soit lesdites données de position soit les vecteurs de position différenciée dérivés desdites données de position, lesdits vecteurs de position différenciée ayant des coordonnées de vecteur représentant la différence entre deux coordonnées consécutives dans un vecteur desdites données de position.

**4.** Procédé selon la revendication 3, dans lequel ladite base de données est une base de données de vecteurs de position différenciée enregistrés.

**5.** Procédé selon la revendication 3, dans lequel ladite base de données est une base de données de vecteurs de position enregistrés.

**6.** Procédé selon l'une quelconque des revendications 3 à 5 dans lequel ladite étape d'identification de vecteurs semblables comprend le fait d'évaluer si la grandeur d'un vecteur supplémentaire obtenu par la soustraction d'un vecteur potentiellement semblable dans ladite base de données à partir dudit vecteur de trajet actuel est inférieure à un certain nombre positif prescrit.

**7.** Procédé selon l'une quelconque des revendications 3 à 6, dans lequel lesdits calculs comprennent l'extraction de données de prédiction à partir de ladite base de données, lesdites données de prédiction étant des données enregistrées pendant une période de temps particulière après que lesdites données ont été identifiées comme semblables.

**8.** Procédé selon la revendication 7, comprenant en outre l'étape consistant à additionner le même nombre à chaque coordonnée dudit vecteur de données de prédiction extrait de sorte à le translater de la quantité du nombre additionné.

**9.** Procédé selon la revendication 8, dans lequel ledit nombre additionné correspond à la position actuelle du train.

**10.** Procédé selon l'une quelconque des revendications 7 à 9, dans lequel un jeu de données de prédiction est extrait, ledit jeu ayant une valeur maximum et une valeur minimum pour toute période de temps particulière donnée.

**11.** Procédé selon la revendication 10, dans lequel lesdites valeurs minimum et maximum représentent une plage de positions possibles du train audit temps ultérieur.

**12.** Procédé selon l'une quelconque des revendications précédentes, dans lequel lesdites étapes d'obtention de données concernant la position du train et de transmission desdites données audit système de contrôle sont réalisées plusieurs fois pour plusieurs trains respectifs et ledit système de contrôle détermine si une collision est possible sur la base d'une prédiction d'une position ultérieure de ladite pluralité de trains.

**13.** Procédé selon la revendication 12, dans lequel ladite étape de prédiction d'une position ultérieure du train est une étape dans laquelle une pluralité d'intervalles de positions ultérieures possibles de train pour une pluralité de trains respectifs est prédite conformément au procédé selon la revendication 8 ; et
ladite étape de détermination si une collision est possible comprend le fait de déterminer si au moins certains de ladite pluralité d'intervalles prédits des positions possibles du train pour ladite pluralité de trains se chevauchent.

**14.** Procédé selon l'une quelconque des revendications précédentes, comprenant en outre l'étape consistant à :

transmettre un signal d'alerte audit train lorsqu'il est déterminé qu'une collision est possible.

**15.** Procédé selon l'une quelconque des revendications précédentes, ledit procédé comprenant en outre :

la transmission d'un signal d'arrêt audit train lorsqu'il est déterminé qu'une collision est possible.

**16.** Procédé selon la revendication 15, comprenant en outre l'étape consistant à :

arrêter automatiquement ledit train lorsque ledit message d'arrêt est reçu par ledit système de contrôle.

**17.** Procédé selon l'une quelconque des revendications précédentes, dans lequel l'étape de détermination d'une position du train utilise des signaux transmis à partir de satellites GPS.

**18.** Procédé selon l'une quelconque des revendications précédentes, dans lequel lesdites étapes de transmission et de réception sont réalisées en utilisant un réseau de communications électroniques.

**19.** Procédé selon l'une quelconque des revendications précédentes, dans lequel les étapes de transmission et de réception sont réalisées en utilisant des protocoles Internet au sein d'une structure extranet.

**20.** Procédé selon l'une quelconque des revendications précédentes, dans lequel l'étape de transmission des données audit système de contrôle est réalisée en utilisant un téléphone portable.

**21.** Procédé selon l'une quelconque des revendications précédentes, dans lequel lesdites données obtenues concernant une position d'un train sont converties en données de position selon un modèle en temps réel.

**22.** Procédé selon la revendication 21, dans lequel lesdits calculs réalisés audit système de contrôle prédisent une position ultérieure, ou une plage de positions ultérieures, selon ledit modèle en temps réel.

**23.** Procédé selon la revendication 22, dans lequel ladite position prédite, ou ladite plage de positions prédites, est convertie en données représentant une position, ou une plage de positions, sur ledit réseau de voies ferrées.

**24.** Appareil pour déterminer la possibilité d'une collision de train, ledit appareil comprenant des premiers moyens situés à bord dudit train et des seconds moyens situés en dehors dudit train.
lesdits premiers moyens comprenant :

des moyens de détermination de position afin de déterminer la position dudit train ;
des moyens de communication reliés de manière opératoire auxdits moyens de détermination de position pour transmettre la position déterminée par lesdits moyens de détermination de position ;

lesdits seconds moyens comprenant :

des moyens de réception pour recevoir ladite position déterminée à partir desdits moyens de communication ;
des moyens de prédiction pour prédire une position ultérieure dudit train basée sur la position déterminée reçue ; et
des moyens de détermination de collision pour déterminer si une collision est possible sur la base du résultat desdits moyens de prédiction.

**25.** Appareil selon la revendication 24, dans lequel lesdits seconds moyens comprennent en outre une base de données contenant des données enregistrées concernant des trajets précédents de train.

**26.** Appareil selon la revendication 25, dans lequel lesdits moyens de prédiction comprennent :

des moyens d'identification pour identifier des données enregistrées qui sont semblables à ladite position déterminée ou semblables à des données dérivées de ladite position déterminée.

**27.** Appareil selon la revendication 26, dans lequel lesdits moyens de prédiction comprennent en outre :

des moyens d'extraction pour extraire des données prédites, lesdites données prédites ayant été obtenues à l'origine à un temps ultérieur par rapport auxdites données d'identification enregistrées.

**28.** Appareil selon la revendication 27, dans lequel lesdits moyens d'extraction sont destinés à l'extraction d'un jeu de données prédites, ledit jeu ayant une valeur minimum et maximum.

**29.** Appareil selon la revendication 28, dans lequel ledit jeu définit une plage de positions ultérieures prédites pour ledit train.

**30.** Appareil selon la revendication 29, dans lequel lesdits moyens de détermination de collision utilisent plusieurs jeux de données prédites obtenues pour différents trains et déterminent qu'une collision est possible lorsqu'au moins deux desdits jeux se chevauchent.

**31.** Appareil selon l'une quelconque des revendications 24 à 30, dans lequel lesdits moyens de détermination de position comprennent un récepteur GPS.

**32.** Appareil selon l'une quelconque des revendications 21 à 31, dans lequel lesdits moyens de communication comprennent un téléphone portable.

**33.** Appareil selon l'une quelconque des revendications 24 à 32, dans lequel lesdits moyens de communication comprennent un ordinateur portable muni d'un modem.

**34.** Appareil selon l'une quelconque des revendications 24 à 33, comprenant en outre des moyens au niveau desdits seconds moyens pour transmettre un message auxdits premiers moyens.

**35.** Appareil selon la revendication 34, dans lequel le message comprend un message d'alerte.

**36.** Appareil selon la revendication 34, dans lequel ledit message comprend un message d'arrêt.

**37.** Appareil selon les revendications 24 à 36, comprenant en outre des moyens au niveau desdits seconds moyens pour transmettre un signal de redémarrage lorsqu'il est déterminé que le train à l'arrêt peut démarrer en toute sécurité.

**38.** Appareil selon la revendication 37, comprenant en outre des moyens au niveau des premiers moyens pour redémarrer un train à l'arrêt sur réception d'un signal de redémarrage reçu.

**39.** Moyen de mémoire conservant des instructions pouvant être lues par ordinateur qui, lorsqu'il est connecté à un ordinateur adapté, est capable de faire exécuter audit ordinateur le procédé suivant :

réception de données à partir de plusieurs trains, lesdites données concernant une position déterminée dudit train respectif ;
accès à une base de données disponible audit ordinateur, ladite base de données contenant des informations sur le réseau ferroviaire sur lequel est localisé ledit train ;
calcul de la position de chaque train sur une voie dudit réseau, en utilisant lesdites données de position reçues et ladite base de données du réseau ;
prédiction de la position de chaque train à un instant ultérieur ; et détermination si une collision entre deux ou plus de ladite pluralité de trains est possible en utilisant lesdits positions ultérieures prédites.

# Figure 1

# Figure 2

# Figure 3

Figure 4

Figure 5

# Figure 6

Track Network Model · Real Line Model

10 Km · Point1 · 12 Km · Point2 · 22 Km · Point3 · 20 Km · $t_1$ $t_2$ · $t_3$ · $t_4$ · F · 64 Km

# Figure 7

Real Line Model · Track Network Model

17 Km · train · 3 Km · 3 Km · F⁻¹ · train · $t_1$ $t_2$ · $t_3$ · $t_4$

Figure 8

Figure 9